# EUROPEAN PATENT SPECIFICATION

(11) **EP 3 668 365 B1**
(45) Date of publication and mention of the grant of the patent: **10.05.2023**
(21) Application number: 18743496.4
(22) Date of filing: 20.07.2018
(51) Int. Cl.: A47L 15/42, A47L 15/48

(54) **A HEAT PUMP TYPE DISHWASHER IN WHICH REFRIGERANT FLOODING IS PREVENTED**
GESCHIRRSPÜLMASCHINE MIT WÄRMEPUMPE MIT VERHINDERUNG EINER ÜBERFLUTUNG MIT KÄLTEMITTEL
LAVE-VAISSELLE DU TYPE À POMPE À CHALEUR DANS LEQUEL TOUT ENGORGEMENT DE RÉFRIGÉRANT EST EMPÊCHÉ

(30) Priority: 17.08.2017 TR 201712271
(43) Date of publication of application: 24.06.2020
(73) Proprietor: Arçelik Anonim Sirketi, 34445 Istanbul (TR)
(72) Inventor: POYRAZ, Onur, 34950 Istanbul (TR); KERPICCI, Husnu, 34950 Istanbul (TR); GUREL, Semih, 34950 Istanbul (TR); ALPTEKIN, Ahmet, 34950 Istanbul (TR)
(86) International application number: PCT/EP2018/069751
(87) International publication number: WO 2019/034370

(56) References cited:
- EP-A2- 1 983 095
- EP-A2- 2 474 261
- WO-A1-2015/185086
- CN-A- 106 580 219
- JP-A- 2007 117 556

## Description

The present invention relates to a dishwasher of the heat pump type enabling heating the washing water.

The heat pump system provided in dishwashers with heat pump, composes of a compressor enabling circulation of a refrigerant by pressurizing it, flow tubes in which the refrigerant circulates, a condenser, an evaporator, and an expansion member. Similar to the conventional dishwashers, the washing programs in dishwashers with heat pump are also composed of the main washing, cold rinsing, warm rinsing and the drying steps. In conventional dishwashers, water heating process in such steps is provided by a heater, while in dishwashers with heat pump, this is provided by the condenser which is the "warm" component of the heat pump system. In dishwashers with heat pump, the refrigerating fluid reaches high pressures and temperatures by means of the compressor compressing and pressurizing the refrigerating fluid. The refrigerating fluid exiting from the compressor arrives to the condenser, begins losing heat by dissipating heat to the outer environment, and condenses. The pressure of the low-temperature and high-pressure gas is reduced by passing it through a throttle valve, and the gas liquefies. Then the refrigerant assuming a low temperature and low pressure, draws heat from the environment while passing through an evaporator, and evaporates by shifting from the liquid phase to gaseous phase. This cycle continues by the refrigerant advancing from the evaporator to the compressor. In dishwashers, water is heated by means of the heat discharged by the condenser. The amount of refrigerating fluid used in heat pump heating cycle, is one of the considerable parameters effecting the cost/performance of the system. The difference arising in evaporation and condensation temperatures depending on varying ambient conditions, effects the temperature and dryness of the refrigerant at the outlet of the evaporator. The refrigerant reaching the compressor being in both phases (liquid+gaseous), effects the performance and durability of the compressor. This leads to irreversible damages in long term operations. The refrigerant leaving the evaporator without completely evaporating (i.e. completely shifting to gaseous phase), in liquid+gaseous phase is called refrigerant (liquid) flooding. In case the liquid refrigerant in liquid phase is sucked by the compressor, the cylinder head and the gasket which is the sealing member between the cylinder head and the cylinder, may get damaged and breakdown. Therefore, it is critical for the refrigerant to enter the compressor in its gaseous phase. In addition, when the refrigerant entering the compressor in liquid phase, mixes with the oil therein, it causes the viscosity of the oil to drop considerably, thereby creating the risk of abrasion on compressor bearings. The reason of refrigerating fluid flooding is the refrigerant maintaining its liquid phase due to not evaporating sufficiently in the evaporator as a result of changes in pressure-temperature correlation of the refrigerant during its cycle. It is therefore required to enable the refrigerant to reach the compressor as completely evaporated.

Patent application no. US2015354879 (A1) relates to a method of preventing refrigerant flooding in a cooler unit.

Patent application no. US2016076542 (A1) relates to a method of launching applied in a compressor in which refrigerant drain is detected.

Patent application no. WO2006088717 (A2) relates to a method of preventing refrigerating fluid flooding likely to occur in the compressor of a heat pump used in refrigeration systems.

Patent no. EP2921098 (B1) discloses a dishwasher in which a heat pump system is used in the drying process.

Patent application no. JP 2007 117556 (A) relates to a method of cooling air that can be generated by the heat pump device in the dishwasher.

Patent application no. WO 2015/185086 (A1) relates to a heat pump arrangement, adapted to heat washing liquid to be used in the washing compartment.

The aim of the present invention is to realize a heat pump type dishwasher in which refrigerant flooding is eliminated.

A dishwasher according to claim 1 is provided to achieve the aim of the present invention .

In an embodiment of the invention, the hot air duct is connected to a drying duct of known embodiments, thus enabling a portion of the air cycling in the drying duct by means of a drying fan, to be directed to the hot air duct, and to be sent from there to the evaporator.

In another embodiment of the invention, the dishwasher comprises a flap provided between the drying duct and the hot air duct, enabling the hot and humid air drawn from the tub to be directed partly to the evaporator through the hot air duct, and partly into the tub.

In another embodiment of the invention, the hot air duct is independent of the drying duct, and the dishwasher comprises a hot air fan enabling the hot and humid air in the tub to flow within the hot air duct, for being directed directly to the evaporator.

The dishwasher with heat pump realized to achieve the aim of the present invention is illustrated in the accompanying drawings, wherein:
Figure 1 is a schematic view of the dishwasher with heat pump.
Figure 2 is a schematic view of a dishwasher with heat pump in an embodiment of the invention.

The elements in the figures are numbered individually and the correspondence of these numbers are given hereinafter.
1. Dishwasher
2. Tub
3. Basket
4. Spray arm
5. Circulation pump
6. Drying duct
7. Drying fan
8. Heat pump system
9. Compressor
10. Chamber
11. Condenser
12. Evaporator
13. Evaporator fan
14. Expansion member
15. Heat sensor
16. Pressure sensor
17. Hot air duct
18. Flap
19. Hot air fan

The dishwasher (1) comprises a tub (2) in which washing, rinsing and drying processes are performed, at least one basket (3) in which the items to be washed are placed, a circulation pump (5) enabling by means of at least one spray arm (4) sending the washing water on the items to be washed, a drying duct (6) enabling after washing process cycling the humid air in the tub (2) by discharging the humid air from the tub (2) and thereby drying the washed items, a drying fan (7) enabling flow of the air in the drying duct (6), and a heat pump system (8) provided on the lower side of the tub (2), enabling heating the washing water.

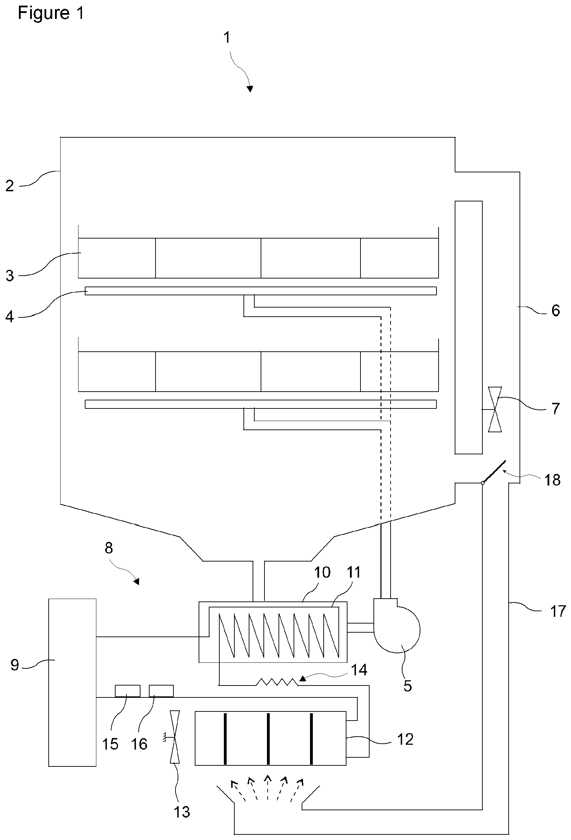

The heat pump system (8) comprises a compressor (9) performing the refrigerant cycle, a condenser (11) dissipating heat to the environment by condensing the refrigerant (refrigerating fluid) pressurized by the compressor (9), and used in heating the washing water by being placed in a chamber (10) in which the washing water is collected, an evaporator (12) enabling drawing heat from the outer environment by evaporating the refrigerant and transferring said heat to the condenser (11), an evaporator fan (13) enabling heat transfer by sending ambient air over the evaporator (12), and an expansion member (14) for example a capillary tube or an expansion valve enabling expansion of the refrigerant advancing from the condenser (11) to the evaporator (12) (Figure 1).

The condenser (11) provided in the heat pump system (8) is used in heating the washing water received in a chamber (10). The heat transfer required for the refrigerant passing through the evaporator (12) to shift to vapor phase is provided by the evaporator fans (13). Since it is out of the drying duct (6), the heat pump system (8) serves only in heating the washing water and does not have a function of drying the air in the tub (2).

The dishwasher (1) of the invention comprises a hot air duct (17) activated upon detecting a "refrigerant flooding" (or refrigerant migration) pursuant to data received from a heat sensor (15) and a pressure sensor (16) placed in the heat pump system (8) between the evaporator (12) and the compressor (9), or at any moment after turning the dishwasher on in order to avoid a potential refrigerant flooding, enabling directing the hot air in the washing environment in the tub (2) onto the evaporator (12) and to be blown on the surface of the evaporator (12).

The hot air directed from the hot air duct (17) to the evaporator (12) provides an additional heat transfer to the heat transfer provided by the evaporator fans (13). The additional heat transfer provided through the hot air duct (17) reduces the load on the evaporator (12), enabling it to operate with a lower capacity. The refrigerant passing through the evaporator (12) is thus enabled to shift rapidly to the vapor phase (gaseous phase), preventing refrigerant in liquid phase from entering the compressor (9).

In an embodiment of the invention, the hot air duct (17) is connected to the drying duct (6), and enables a portion of the air cycling by means of the drying fan (7) in the drying duct (6) to be directed to the hot air duct (17), and to be sent from there to the evaporator (12).

In another embodiment of the invention, the dishwasher (1) comprises a flap (18) provided between the drying duct (6) and the hot air duct (17), enabling the hot and humid air drawn from the tub (2) to be directed partly to the evaporator (12) through the hot air duct (17), and partly back into the tub (2) through the drying duct (6).

In another embodiment of the invention, the flap (18) enables the hot and humid air circulating in the drying duct (6) to be sent at different times to the hot air duct (17), through the drying duct (6) to the tub (2) or to the outer environment.

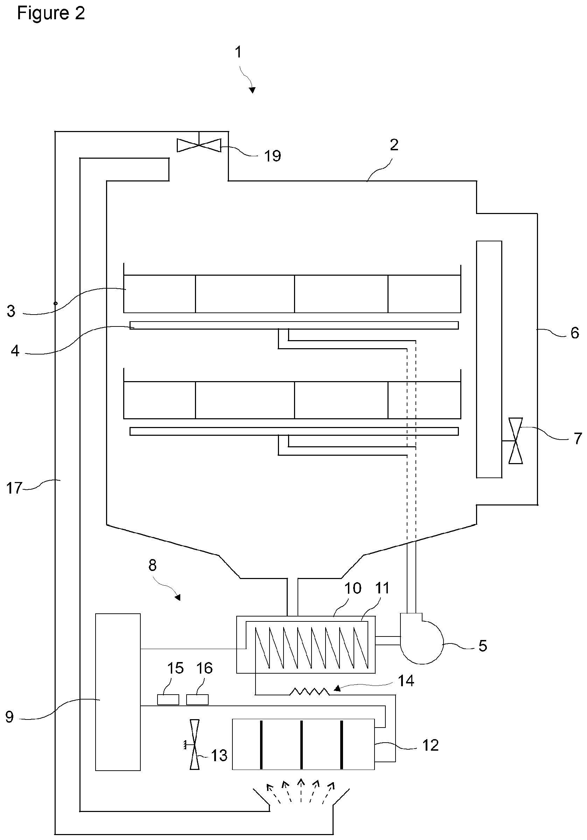

In another embodiment of the invention, the hot air duct (17) is independent of the drying duct (6), and the dishwasher (1) comprises a hot air fan (19) provided on the tub (2), enabling the hot and humid air in the tub (2) to flow within the hot air duct (17) for being directed directly to the evaporator (12) (Figure 2).

In the dishwasher (1) of the invention, refrigerant is enabled to enter the compressor (9) always in the vapor (gaseous) phase, preventing the problem of entering the compressor (9) of refrigerant in liquid phase, known as refrigerant flooding. Mixing of refrigerant to the oil in the compressor (9) is prevented and viscosity of the oil is protected, thereby avoiding abrasion and damages of the movable parts requiring lubrication in the compressor (9). Desired performance is obtained from the compressor (9) in varying operational conditions.

## Claims

1. A dishwasher (1) **comprising** a tub (2), a drying duct (6) enabling drying the washed items, a drying fan (7) enabling air to flow in the drying duct (6), and a heat pump system (8) provided on the lower side of the tub (2) having a compressor (9), a condenser (11), an evaporator (12), at least one evaporator fan (13) and an expansion member (14), **characterized by** a hot air duct (17) activated upon detecting a refrigerant flooding problem pursuant to data received from a heat sensor (15) and a pressure sensor (16) placed in the heat pump system (8) between the evaporator (12) and the compressor (9), enabling directing the hot air in the washing environment in the tub (2) onto the evaporator (12).

2. A dishwasher (1) according to claim 1, **characterized by** the hot air duct (17) connected to the drying duct (6), and to which part of the air circulated by means of the drying fan (7) in the drying duct (6) is directed.

3. A dishwasher (1) according to claim 1 or 2, **characterized by** a flap (18) provided between the drying duct (6) and the hot air duct (17), enabling the hot and humid air drawn from the tub (2) to be directed partly to the evaporator (12) through the hot air duct (17), and partly back into the tub (2) through the drying duct (6).

4. A dishwasher (1) according to claim 3, **characterized by** the flap (18) enabling the hot and humid air circulating in the drying duct (6) to be sent at different times to the hot air duct (17), through the drying duct (6) to the tub (2) or to the outer environment.

5. A dishwasher (1) according to claim 1, **characterized by** the hot air duct (17) being independent of the drying duct (6), **and** a hot air fan (19) provided on the tub (2), enabling the hot and humid air in the tub (2) to flow within the hot air duct (17) for being directed directly to the evaporator (12)

## Patentansprüche

1. Ein Geschirrspüler (1) **umfasst** eine Wanne (2), einen Trocknungskanal (6), der das Trocknen der gewaschenen Gegenstände ermöglicht, ein Trocknungsgebläse (7), das es ermöglicht, dass Luft in den Trocknungskanal (6) strömt, und ein Wärmepumpensystem (8), das auf der unteren Seite der Wanne (2) vorgesehen ist und einen Kompressor (9) aufweist, einen Kondensator (11), einen Verdampfer (12), mindestens ein Verdampfergebläse (13) und ein Expansionselement (14), **gekennzeichnet ist er durch** einen Heißluftkanal (17), der aktiviert wird, einen Heißluftkanal (17), der aktiviert wird, wenn ein Kühlmittelüberschwemmungsproblem erkannt wird, gemäß Daten, die von einem Wärmesensor (15) und einem Drucksensor (16) empfangen werden, die in dem Wärmepumpensystem (8) zwischen dem Verdampfer (12) und dem Kompressor (9) angeordnet sind, wodurch die heiße Luft in der Waschumgebung in der Wanne (2) auf den Verdampfer (12) geleitet werden kann.

2. Ein Geschirrspüler (1), wie in Anspruch 1 aufgeführt, **ist dadurch gekennzeichnet, dass** der Heißluftkanal (17) mit dem Trocknungskanal (6) verbunden ist und zu dem ein Teil der mittels des Trocknungsgebläses (7) im Trocknungskanal (6) umgewälzten Luft geleitet wird.

3. Ein Geschirrspüler (1), wie in Anspruch 1 oder 2 aufgeführt, **ist dadurch gekennzeichnet, dass** zwischen dem Trocknungskanal (6) und dem Heißluftkanal (17) eine Klappe (18) vorgesehen ist und es ermöglicht, dass die aus der Wanne (2) angesaugte heiße und feuchte Luft teilweise durch die Heißluftkanal (17) zum Verdampfer (12) und teilweise durch die Trocknungskanal (6) zurück in die Wanne (2) geleitet wird.

4. Ein Geschirrspüler (1), wie in Anspruch 3 aufgeführt, **ist dadurch gekennzeichnet, dass** die Klappe (18) ermöglicht, dass die im Trocknungskanal (6) zirkulierende heiße und feuchte Luft zu unterschiedlichen Zeiten zum Heißluftkanal (17) geleitet wird, durch den Trocknungskanal (6) in die Wanne (2) oder in die äußere Umgebung.

5. Ein Geschirrspüler (1), wie in Anspruch 1 aufgeführt, **ist dadurch gekennzeichnet, dass** die Heißluftkanal (17) unabhängig von der Trocknungskanal (6) ist, und ein an der Wanne (2) vorgesehenes Heißluftgebläse (19), das ermöglicht, dass die heiße und feuchte Luft in der Wanne (2) innerhalb des Heißluftkanals (17) strömt, um direkt zum Verdampfer (12) geleitet zu werden.

## Revendications

1. Un lave-vaisselle (1) **comprenant** une baignoire (2), un conduit de séchage (6) permettant de sécher les articles lavés, un ventilateur de séchage (7) permettant à l'air de circuler dans le conduit de séchage (6), et un système de pompe à chaleur (8) prévu sur le côté inférieur de la baignoire (2) ayant un compresseur (9), un condenseur (11), un évaporateur (12), au moins un ventilateur d'évaporateur (13) et un élément d'expansion (14), **caractérisé par** un conduit d'air chaud (17) activé lors de la détection d'un problème d'inondation du réfrigérant en fonction des données reçues d'un capteur de chaleur (15) et d'un capteur de pression (16) placés dans le système de pompe à chaleur (8) entre l'évaporateur (12) et le compresseur (9), permettant de diriger l'air chaud dans l'environnement de lavage dans la baignoire (2) sur l'évaporateur (12).

2. Un lave-vaisselle (1) selon la déclaration 1, **caractérisé par** le conduit d'air chaud (17) relié au conduit de séchage (6), et vers lequel est dirigée une partie de l'air mis en circulation au moyen du ventilateur de séchage (7) dans le conduit de séchage (6).

3. Un lave-vaisselle (1) selon la déclaration 1 ou 2, **caractérisé par** un volet (18) prévu entre le conduit de séchage (6) et le conduit d'air chaud (17), permettant à l'air chaud et humide tiré de la baignoire (2) d'être dirigé en partie vers l'évaporateur (12) à travers le conduit d'air chaud (17), et en partie en retour dans la baignoire (2) à travers le conduit de séchage (6).

4. Un lave-vaisselle (1) selon la déclaration 3, **caractérisé par** le volet (18) permettant à l'air chaud et humide circulant dans le conduit de séchage (6) d'être envoyé à différents moments vers le conduit d'air chaud (17), à travers le conduit de séchage (6) vers la baignoire (2) ou vers l'environnement extérieur.

5. Un lave-vaisselle (1) selon la déclaration 1, **caractérisé par** le conduit d'air chaud (17) étant indépendant du conduit de séchage (6), **et** un ventilateur d'air chaud (19) prévu sur la baignoire (2), permettant à l'air chaud et humide dans la baignoire (2) de circuler dans le conduit d'air chaud (17) pour être dirigé directement vers l'évaporateur (12).
